# EUROPÄISCHE PATENTSCHRIFT

(11) **EP 2 543 091 B1**
(45) Veröffentlichungstag und Bekanntmachung des Hinweises auf die Patenterteilung: **13.05.2015**
(21) Anmeldenummer: 11704537.7
(22) Anmeldetag: 03.02.2011
(51) Int. Cl.: H01M 10/60

(54) **BATTERIE FÜR EINEN KRAFTWAGEN**
BATTERY FOR A MOTOR VEHICLE
ACCUMULATEUR POUR UN VÉHICULE AUTOMOBILE

(30) Priorität: 01.03.2010 DE 102010009732
(43) Veröffentlichungstag der Anmeldung: 09.01.2013
(73) Patentinhaber: Audi AG, 85045 Ingolstadt (DE)
(72) Erfinder: ENNING, Norbert, 85095 Denkendorf (DE)
(74) Vertreter: Herbst, Matthias Heinz
(86) Internationale Anmeldenummer: PCT/EP2011/000495
(87) Internationale Veröffentlichungsnummer: WO 2011/107196

(56) Entgegenhaltungen:
- EP-A1- 1 164 645
- EP-A2- 1 906 126
- DE-A1- 10 055 620
- DE-A1- 19 829 293
- DE-A1-102008 034 868
- FR-A1- 2 789 231
- FR-A1- 2 908 557

## Beschreibung

Die Erfindung betrifft eine Batterie für einen Kraftwagen.

Um die Antriebsaggregate von Elektro- oder Hybridfahrzeugen mit Energie zu versorgen, finden Hochvoltbatterien mit hoher Leistungsdichte Anwendung. Um die gewünschte hohe Klemmenspannung zu erreichen, wird bei solchen Batterien eine Vielzahl einzelner elektrochemischer Zellen in einer Reihenschaltung verbunden, so dass sich die relativ niedrigen Klemmenspannungen der einzelnen Zellen zur gewünschten Gesamtklemmenspannung der Batterie addieren. Aufgrund der hohen Lade- und Entladeleistungen im Betrieb solcher Batterien erwärmen sich die einzelnen elektrochemischen Zellen beim Laden beziehungsweise Entladen der Batterie stark. Solche Batterien müssen daher gekühlt werden, um ein Überhitzen zu vermeiden.

Aus der DE 10 2005 047 034 A1 ist eine Vorrichtung zum Kühlen von Batterien eines Fahrzeugs bekannt, bei welchem die einzelnen Zellen einer Batterie in einem Gehäuse aufgenommen sind und mittels eines Gebläses mit Luft umspült werden. Aufgrund der relativ geringen Wärmekapazität von Luft muss eine solche Kühlvorrichtung ein leistungsstarkes und damit schweres Gebläse aufweisen, um den gewünschten Wärmeabtransport sicherzustellen.

Aus der DE 10 2006 004 419 A1 ist eine weitere Kühlvorrichtung bekannt, bei welcher zwischen jeweils zwei Einzelzellen einer Batterie ein plattenförmiges Kühlelement angeordnet ist, welche mit einem Kühlmedium durchströmt werden. Solche Vorrichtungen bieten eine gute Kühlleistung, sind jedoch schwer und aufwändig in der Konstruktion.

Aus der EP 1 906 126 A2 ist eine Vorrichtung zum Kühlen elektrischer Elemente bekannt, welche einen von einem Kühlmedium durchströmbaren Kühlkörper umfasst, der mit elektrochemischen Zellen einer Batterie in thermischem Kontakt steht.

Die FR 27 89 231 A1 beschreibt ein Batteriegehäuse mit einem oberen und einem unteren Deckelteil, die über ein Zwischenteil verbunden sind. Zwischen dem oberen und unteren Deckelteil sind Luftkanäle ausgebildet, die sich zwischen den im Gehäuse aufgenommenen elektrochemischen Zellen erstrecken und durch welche Außenluft das Gehäuse durchströmen kann, um so entstehende Wärme abzuführen.

Die FR 29 08 557 A1 offenbart ein weiteres Batteriegehäuse, in welchem rund ausgebildete elektrochemische Zellen in einer wabenförmigen Bodenstruktur aufgenommen sind, die mit einer Deckplatte abgedeckt ist. Im Bereich der Bodenstruktur ist ein Flüssigkeitsbett vorgesehen, welches mit einem Kühlmedium zum Kühlen der elektrochemischen Zellen durchströmt werden kann.

Aus der EP 1 164 645 A1 ist ein Trägerteil für elektrochemische Zellen bekannt, mittels welchem eine Mehrzahl von elektrochemischen Zellen zu einer Batterie zusammengefasst werden kann. Das Trägerteil kontaktiert die Zellen lediglich auf der Seite ihrer Abgriffspole und fasst diese mechanisch und elektrisch zu einer Einheit zusammen. Im Trägerteil können gegebenenfalls noch Luftkanäle zum Abführen von in den elektrochemischen Zellen gebildeten Gasen vorgesehen werden.

Die DE 10 2008 034 868 A1 offenbart eine Batterie mit einer in einem Batteriegehäuse angeordneten Wärmeleitplatte. Die Wärmeleitplatte kontaktiert einzelne elektrochemische Zellen der Batterie direkt und dient zudem als Trägerplatte für diese Zellen. In der Wärmeleitplatte sind Kühlmittelkanäle vorgesehen, die mit einem extern zugeführten Kühlmittel durchströmt werden können.

Aus der DE 108 29 293 A1 ist ein Batteriekühlsystem bekannt, bei welchem ein Batteriegehäuse mit einem flüssigen Kühlmittel mit hohem Siedepunkt gefüllt wird. Im Betrieb der Batterie verdampft das Kühlmittel aufgrund der entstehenden Wärme und tritt durch eine Leitung aus dem Batteriegehäuse aus. Durch die Leitung wird das gasförmige Kühlmittel zu einer Kondensationseinrichtung geführt, in welcher es rekondensiert wird. Das wieder verflüssigte Kühlmittel kann dann dem Batteriegehäuse wieder zugeführt werden.

Die DE 100 55 620 A1 offenbart ein Batteriepaket, in dem mehrere elektrochemische Zellen so aufgenommen sind, dass sie von Kühlluft umströmt werden können. Zur verbesserten Wärmeabfuhr sind Kühlkörper vorgesehen, die in thermischen Kontakt mit den elektrochemischen Zellen stehen und eine vergrößerte Oberfläche für die konvektive Wärmeabfuhr bieten.

Aus der DE 10 2008 034 863 A1 ist ferner eine Batterie mit einer Mehrzahl einzelner elektrochemischer Zellen bekannt, bei welcher die Einzelzellen an einer Kühlplatte gehalten sind. Die Kühlplatte wird im Betrieb der Batterie mit einem Kühlmedium durchströmt, um die elektrochemischen Zellen zu kühlen.

Die DE 10 2008 041 365 A1 beschreibt ein Batteriemodul mit wenigstens einer in einem Gehäuse aufgenommenen Batterie. Zur Kühlung der Batterie kann das gesamte Gehäuse mit einem Kühlfluid durchströmt werden. Mehrere solche Batteriemodule können gemeinsam in einem weiteren Gehäuse aufgenommen und zu einem Batteriemodulsystem kombiniert werden.

Der vorliegenden Erfindung liegt somit die Aufgabe zugrunde, eine Batterie für einen Kraftwagen bereitzustellen, welche gut kühlbar ist und gleichzeitig ein geringes Eigengewicht und eine einfache Konstruktion aufweist.

Diese Aufgabe wird durch eine Batterie mit den Merkmalen des Patentanspruchs 1 gelöst.

Diese Batterie für einen Kraftwagen weist ein Batteriegehäuse auf, in welchem wenigstens eine Zellengruppe mit einer Mehrzahl von elektrochemischen Zellen aufgenommen ist. Die Zellen einer Zellengruppe sind in einem jeweiligen Zellenträger gehalten, wobei ein Deckelteil des Zellenträgers eine Kühlmittelleitung zum Kühlen der Zellen der Zellengruppe umfasst. Die Zellenträger einer solchen Batterie besitzen also zwei Funktionen. Zum einen halten sie die Einzelzellen in ihrer gewünschten Position, zum anderen kann durch die in das Deckelteil integrierten Kühlmittelleitungen Wärme von den einzelnen elektrochemischen Zellen der Batterie abgeführt werden. Durch diese Funktionsintegration wird eine besonders leichte Batterie geschaffen.

Da die elektrochemischen Zellen direkt an dem Zellenträger gehalten sind, besteht zudem ein unmittelbarer Kontakt, so dass Wärme aus den elektrochemischen Zellen direkt durch Wärmeleitung an die Kühlmittelleitung und damit an ein durch diese strömendes Kühlfluid abgegeben werden kann. Dies ermöglicht eine besonders gute Wärmeabfuhr aus der Batterie.

Um eine besonders gute Wärmeverteilung innerhalb des Batteriegehäuses zu erzielen, ist wenigstens ein Lüfter zum Umwälzen von Luft innerhalb des Batteriegehäuses vorgesehen. Ein solcher Lüfter dient der Unterstützung der konvektionsgetriebenen Wärmeverteilung innerhalb des Batteriegehäuses.

Auch zwischen den Zellen einer Zellengruppe und dem Deckelteil kann ein Luftspalt gegeben sein. Das Deckelteil berührt die Zellen dann nur bereichsweise, beispielsweise direkt an ihren Abgriffspolen, wodurch noch immer ein hinreichender thermischer Kontakt vorhanden ist. Durch den Luftspalt kann auch hier per Konvektion Wärme transportiert und an die Zellenträger abgegeben werden. Die Luftspalte stellen zudem Raum für die thermische Ausdehnung von Komponenten der Batterie zur Verfügung, so dass Verspannung zwischen einzelnen Zellen und ihren Kontaktelementen bei Erwärmung der Batterie vermieden wird.

Vorzugsweise ist das Batteriegehäuse luftdicht abgeschlossen. Damit wird verhindert, dass bei einem Defekt einer Zelle ein Elektrolyt an die Umgebung abgegeben wird. Die Luft in einem gegebenenfalls vorhandenen geringen Luftvolumen des Batteriegehäuses muss in der Regel nicht mittels Gebläsen oder dergleichen bewegt werden, da aufgrund der hohen Wärmeabfuhrleistung der Zellenträger die Konvektion im Luftraum zur Wärmeverteilung vollständig ausreicht.

Um eine besonders gute Wärmeverteilung innerhalb des Batteriegehäuses zu erzielen, kann gemäß einer weiteren bevorzugten Ausführungsform der Erfindung dennoch wenigstens ein Lüfter zum Umwälzen von Luft innerhalb des Batteriegehäuses vorgesehen werden. Ein solcher Lüfter dient der Unterstützung der konvektionsgetriebenen Wärmeverteilung innerhalb des Batteriegehäuses. Da die eigentliche Wärmeabfuhr über die Kühlmittelkanäle erfolgt, kann ein solcher Lüfter besonders klein und leicht dimensioniert werden.

Vorzugsweise weist die Batterie wenigstens zwei Zellengruppen auf, welche in einer Einbaulage der Batterie vertikal übereinander angeordnet sind. Zwischen den Zellengruppen ist dabei jeweils ein Deckelteil eines jeweiligen Zellenträger angeordnet. Eine solche Batterie ist also modular aufgebaut und entsteht durch Stapeln von jeweils mit einem zugeordneten Zellenträger verbundenen Zellengruppen übereinander. Da jeder Zellenträger Kühlkanäle aufweist, wird eine solche Batterie über ihr gesamtes Volumen hinweg besonders gut gekühlt.

Vorzugsweise erstreckt sich die Kühlmittelleitung schlangenförmig durch das Deckelteil. Hierdurch steht eine besonders große Kontaktfläche zwischen dem Zellenträger selbst und dem die Kühlmitteleitung durchströmenden Kühlmedium zur Verfügung, so dass eine besonders gute Kühlleistung erzielt wird. Es ist dabei besonders zweckmäßig, die Kühlmittelleitung durch Eingießen in einen Kunststoffgrundkörper des Deckelteils zu integrieren.

Vorzugsweise sind die Kühlmittelleitungen aller Deckelteile der Batterie mit einem gemeinsamen Kühlmittelanschluss des Batteriegehäuses verbunden. Dies ermöglicht eine besonders einfache Montage der Batterie, da nach außen hin lediglich eine Kühlmittelzufuhrleitung und eine Kühlmittelabfuhrleitung mit der Batterie verbunden werden muss, so dass gegebenenfalls auch Batterien mit einer unterschiedlichen Anzahl von Zellengruppen mit ansonsten identischen externen Komponenten eines Kühlsystems verbunden werden können.

Die Erfindung betrifft ferner einen Kraftwagen mit einer Batterie der beschriebenen Art.

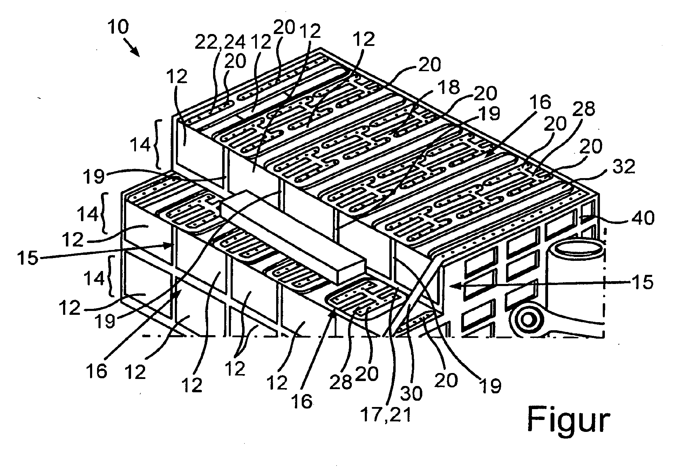

Im Folgenden soll die Erfindung und ihre Ausführungsformen anhand der Zeichnung näher erläutert werden. Die einzige Figur zeigt eine perspektivische Ansicht eines Ausführungsbeispiels einer erfindungsgemäßen Batterie.

Eine im Ganzen mit 10 bezeichnete Hochvoltbatterie für einen Kraftwagen ist aus einer Mehrzahl einzelner Lithiumionenzellen 12 aufgebaut, die der Übersichtlichkeit halber in der Figur nicht alle bezeichnet sind. Um die gewünschte Klemmenspannung von mehreren hundert Volt zu erreichen, sind die Lithiumionenzellen 12 in Reihe geschaltet.

Die einzelnen Zellen 12 sind zu Zellengruppen 14 zusammengefasst und durch jeweilige gemeinsame Träger 15 gehalten. Die Träger 15 bestehen aus einem Grundgerüst 17 sowie einer Deckelplatte 16. Stege 19, die von einem Boden 21 des Grundgerüsts 17 abragen, begrenzen Aufnahmen für die einzelnen Zellen 12. Die Deckelplatte 16 besitzt einen Kunststoffgrundkörper 18 mit schlangenförmige Kühlmittelleitungen 32, die sich über die gesamte Fläche der Deckelplatte 16 erstrecken. Im Betrieb der Batterie 10 werden diese mit einem Kühlmedium durchströmt, um die in den Einzelzellen 12 anfallende Wärme abzuführen. Zweckmäßigerweise sind die Kühlmittelleitungen 32 in die Deckelplatte 16 eingegossen.

Die Anordnung der Kühlmittelleitungen 32 in den Deckelplatten 16, die auf Seiten der Abgriffspole 24 der Einzelzellen 12 auf die Einzelzellen 12 aufgesetzt sind, ist besonders zweckmäßig, da in der unmittelbaren Umgebung der Abgriffspole 24 besonders viel Wärme anfällt. Um auch aus anderen Bereichen der Einzelzellen Wärme abführen zu können, ist zwischen benachbarten Einzelzellen 12 ein Luftspalt vorgesehen. Auch zwischen einer Stirnfläche der Einzelzellen und der Deckelplatte 16 ist ein Luftspalt vorgesehen. Durch die Luftspalte kann Wärme zusätzlich durch Konvektion von den Einzelzellen 12 abgeführt werden. Die Luftspalte dienen nicht der eigentlichen Wärmeabfuhr aus der Batterie 10, welche über die Kühlmittelleitungen 32 erfolgt, sondern vielmehr der gleichmäßigen Wärmeverteilung innerhalb der Batterie 10. Gegebenfalls kann die Wärmeverteilung durch Konvektion noch über einen nicht gezeigten Lüfter unterstützt werden.

Die einzelnen Zellengruppen 14 sind in einem Gehäuse 40 untergebracht und können mit diesem an Karosseriebauteilen des Kraftwagens befestigt werden. Zwischen den einzelnen Zellengruppen 14 sind keine weiteren mechanischen Verbindungen notwendig, sie können einfach innerhalb des Gehäuses 40 aufeinander gestapelt werden, was eine besonders einfache Herstellung der Batterie 10 ermöglicht. Das Gehäuse 40 ist zweckmäßigerweise flüssigkeits- und luftdicht, so dass beim Auslaufen einer Zelle 12 klein Elektrolytmaterial an die Umgebung abgegeben werden kann.

In die Deckelplatten 16 sind elektrische Kontaktelemente 20 eingegossen, die ebenfalls in der Figur nicht alle bezeichnet sind. Die Kontaktelemente 20 weisen Öffnungen 22 auf, in die Anschlusspole 24 der Einzelzellen 12 eingeführt sind. Die Öffnungen der Kontaktelemente 20 besitzen eine Einführschräge, die das Einführen der Anschlusspole 24 erleichtert.

Um eine Zellengruppe 14 zusammenzufügen, brauchen die Einzelzellen 12 der Zellengruppe 14 daher im Grundgerüst 17 des Zellenträgers 15 nur grob vororientiert werden. Beim Aufsetzen der Deckelplatte 16 werden die Einzelzellen 12 durch die Wechselwirkung zwischen ihren Abgriffspolen 24 und der Einführschräge der Kontaktelemente 20 selbsttätig korrekt ausgerichtet. Dadurch ist die Herstellung einer solchen Batterie 10 besonders gut automatisierbar.

Die Kontaktelemente 22, die benachbarte Einzelzellen 12 kontaktieren, sind über Brücken 28 elektrisch leitend miteinander verbunden, so dass sich eine Reihenschaltung der Einzelzellen 12 in den Zellengruppen 14 ergibt. Durch weitere Verbindungselemente 30 sind die einzelnen Zellengruppen 14 wiederum im Sinne einer Reihenschaltung miteinander verbunden, so dass trotz der geringen Klemmenspannung üblicher Einzelzellen, beispielsweise etwa 1,7 V bei Lithiumionenzellen, eine Gesamtspannung der Batterie von mehreren hundert Volt erreicht werden kann.

In die Deckelplatte 16 können noch weitere Elemente der Batterie 10 integriert werden. Beispielsweise ist es möglich, eine Steuervorrichtung mit dem Kunststoffgrundkörper 18 der Deckelplatte 16 zu vergießen, die es ermöglicht, beim Laden oder Entladen der Batterie 10 den Ladezustand der Einzelzellen 12 zu balancieren, was die Lebensdauer solcher Batterien 10 beträchtlich erhöht. Jede Deckelplatte 16 bildet so zusammen mit den zugeordneten Zellen 12 und dem Grundgerüst 17 des Zellenträgers ein Modul, welches alle zum Betrieb der Zellen 12 notwendigen Funktionen zur Verfügung stellt. Aus den einzelnen Modulen können auf einfachste Art unterschiedlich dimensionierte Batterien 10 konstruiert werden.

## Patentansprüche

1. Batterie (10) für einen Kraftwagen mit einem Batteriegehäuse (40), in welchem wenigstens eine Zellengruppe (14) mit einer Mehrzahl von elektrochemischen Zellen (12) aufgenommen ist, wobei die Zellen (12) einer Zellengruppe (14) an einem jeweiligen Zellenträger (15) gehalten sind, wobei ein plattenförmiges Deckelteil (16) des Zellenträgers (15) eine Kühlmittelleitung (32) zum Kühlen der Zellen der Zellengruppe (14) umfasst,
**dadurch gekennzeichnet, dass**
innerhalb des luftdicht abgeschlossenen Batteriegehäuses (40) wenigstens ein Lüfter zum Umwälzen von Luft innerhalb des Batteriegehäuses (40) angeordnet ist.

2. Batterie (10) nach Anspruch 1,
**dadurch gekennzeichnet, dass**
die Zellen (12) auf der Seite von Abgriffspolen (24) der Zellen (12) mit dem Deckelteil (16) verbunden sind.

3. Batterie (10) nach Anspruch 1 oder 2,
**dadurch gekennzeichnet, dass**
zwischen jeweils benachbarten Zellen (12) einer Zellengruppe (14) ein Luftspalt gegeben ist.

4. Batterie (10) nach einem der Ansprüche 1 bis 3,
**dadurch gekennzeichnet, dass**
zwischen den Zellen (12) einer Zellengruppe (14) und dem Deckelteil (16) ein Luftspalt gegeben ist.

5. Batterie (10) nach einem der Ansprüche 1 bis 4,
**dadurch gekennzeichnet, dass**
die Batterie (10) wenigstens zwei Zellengruppen (14) umfasst, welche in einer Einbaulage der Batterie (10) vertikal übereinander angeordnet sind, wobei die Zellengruppen (14) durch Deckelteile (16) der jeweiligen Zellenträger (15) getrennt sind.

6. Batterie (10) nach einem der Ansprüche 1 bis 5,
**dadurch gekennzeichnet, dass**
die Kühlmittelleitung (32) sich schlangenförmig durch das Deckelteil (16) erstreckt.

7. Batterie (10) nach einem der Ansprüche 1 bis 6,
**dadurch gekennzeichnet, dass**
die Kühlmittelleitungen (32) aller Deckelteile (16) der Batterie (10) mit einem gemeinsamen Kühlmittelanschluss des Batteriegehäuses (40) verbunden sind.

8. Kraftwagen mit einer Batterie (10) nach einem der Ansprüche 1 bis 7.

## Claims

1. Battery (10) for a motor vehicle, having a battery housing (40) in which at least one cell group (14) comprising a plurality of electrochemical cells (12) is accommodated, the cells (12) of a cell group (14) being held on a respective cell carrier (15), a plate-shaped cover part (16) of the cell carrier (15) comprising a coolant conduit (32) for cooling the cells of the cell group (14),
**characterised in that** at least one fan for circulating air within the battery housing (40) is arranged inside the battery housing (40) which is closed off in airtight manner.

2. Battery (10) according to claim 1,
**characterised in that** the cells (12) are connected to the cover part (16) on the side of the cells (12) that is provided with tapping poles (24).

3. Battery (10) according to claim 1 or 2,
**characterised in that** an air gap is provided between adjacent cells (12) of a cell group (14).

4. Battery (10) according to one of claims 1 to 3,
**characterised in that** an air gap is provided between the cells (12) of a cell group (14) and the cover part (16).

5. Battery (10) according to one of claims 1 to 4,
**characterised in that** the battery (10) comprises at least two cell groups (14) which are arranged vertically above one another in an installed position of the battery (10), the cell groups (14) being separated by cover parts (16) of the respective cell carriers (15).

6. Battery (10) according to one of claims 1 to 5,
**characterised in that** the coolant conduit (32) extends in a serpentine configuration through the cover part (16).

7. Battery (10) according to one of claims 1 to 6, **characterised in that** the coolant conduits (32) of all the cover parts (16) of the battery (10) are connected to a common coolant connection of the battery housing (40).

8. Motor vehicle having a battery (10) according to one of claims 1 to 7.

## Revendications

1. Batterie (10) pour un véhicule automobile avec un boîtier de batterie (40) dans lequel est logé au moins un groupe de cellules (14) avec une pluralité de cellules électrochimiques (12), les cellules (12) d'un groupe de cellules (14) étant maintenues sur un support de cellule (15) respectif, une partie formant couvercle (16) qui est en forme de plaque et qui appartient au support de cellule (15) comprenant une conduite de liquide de refroidissement (32) pour refroidir les cellules du groupe de cellules (14),
**caractérisée en ce qu'**au moins un ventilateur destiné à faire circuler de l'air à l'intérieur du boîtier de batterie (40) est agencé à l'intérieur du boîtier de batterie (40) fermé de manière étanche à l'air.

2. Batterie (10) selon la revendication 1, **caractérisée en ce que** les cellules (12) sont reliées à la partie formant couvercle (16) du côté des pôles de prise de courant (24) des cellules (12).

3. Batterie (10) selon la revendication 1 ou 2, **caractérisée en ce qu'**une fente d'aération est prévue entre des cellules (12) d'un groupe de cellules (14) qui sont respectivement voisines les unes des autres.

4. Batterie (10) selon l'une des revendications 1 à 3, **caractérisée en ce qu'**une fente d'aération est prévue entre les cellules (12) d'un groupe de cellules (14) et la partie formant couvercle (16).

5. Batterie (10) selon l'une des revendications 1 à 4, **caractérisée en ce que** la batterie comprend au moins deux groupes de cellules (14) qui, dans une position de construction de la batterie (10), sont agencés verticalement les uns au-dessus des autres, les groupes de cellules (14) étant séparés par des parties formant couvercles (16) des supports de cellules respectifs (15).

6. Batterie (10) selon l'une des revendications 1 à 5,
**caractérisée en ce que** la conduite de liquide de refroidissement (32) s'étend en forme de serpentin à travers la partie formant couvercle (16).

7. Batterie (10) selon l'une des revendications 1 à 6,
**caractérisée en ce que** les conduites de liquide de refroidissement (32) de toutes les parties formant couvercles (16) de la batterie (10) sont reliées à un raccord de liquide de refroidissement commun du boîtier de batterie (40).

8. Véhicule automobile avec une batterie (10) selon l'une des revendications 1 à 7.
